# EUROPEAN PATENT APPLICATION

(11) **EP 4 742 155 A2**
(43) Date of publication of application: **13.05.2026**
(21) Application number: 26161561.1
(22) Date of filing: 02.03.2026
(51) Int. Cl.: G06T 7/33, G06T 7/521, G06T 7/579

(54) **THREE-DIMENSIONAL RECONSTRUCTION METHOD AND APPARATUS, AND DEVICE**

(30) Priority: 03.03.2025 CN 202510245810
(71) Applicant: Shining 3D Tech Co., Ltd., Hangzhou, Zhejiang 311258 (CN)
(72) Inventor: CHEN, Han, Hangzhou (CN); ZHAO, Xiaobo, Hangzhou (CN); CHEN, Xiaojun, Hangzhou (CN); ZHANG, Jian, Hangzhou (CN); HUANG, Leijie, Hangzhou (CN)
(74) Representative: Dai, Simin

(57) **Abstract**

Embodiments of the present disclosure provide a three-dimensional reconstruction method. Mark points are set on a surface of a target object. Then, multiple frames of mark point three-dimensional point cloud are reconstructed based on image frames containing a mark point pattern, and multiple frames of target object three-dimensional point cloud are reconstructed based on image frames containing a structured light pattern. As a coordinate transformation relationship between the multiple frames of the three-dimensional point cloud can be accurately determined, and a coordinate transformation relationship between a single frame of the mark point three-dimensional point cloud and a single frame of the target object three-dimensional point cloud can also be determined, the mark points can further be used to assist in stitching the multiple frames of the target object three-dimensional point cloud, to obtain a more accurate stitching result.

## Description

### TECHNICAL FIELD

Embodiments of the present application relate to the field of three-dimensional scanning technology, and particularly to a three-dimensional reconstruction method and apparatus, a device, and a storage medium.

### BACKGROUND

In the process of performing three-dimensional reconstruction of a target object using data collected by a three-dimensional scanning device, it is usually necessary to use the three-dimensional scanning device to scan the target object multiple times from different perspectives to obtain multi-frame partial point cloud data, and then stitch the multi-frame partial point cloud data to obtain global point cloud data of the target object.

In related technologies, a common stitching manner is geometric stitching, which utilizes the geometric features of the target object itself for stitching. This stitching manner requires the target object to have rich and non-repetitive geometric features. When scanning some geometrically regular target objects, for example, target objects with repetitive geometric features or weak feature information such as cylindrical abutments and implant posts, due to the limited number of feature points extracted, high-precision stitching results cannot be calculated, resulting in poor accuracy of the finally reconstructed three-dimensional model.

### SUMMARY

Embodiments of the present application provide a three-dimensional reconstruction method and apparatus, a device, and a storage medium.

According to a first aspect of embodiments of the present application, a three-dimensional reconstruction method is provided, the method includes:
acquiring an image frame set collected by a three-dimensional scanning device during a scanning process of a target object, wherein a surface of the target object is provided with mark points, and structured light is projected onto the surface of the target object during at least part of the scanning process of the target object;
performing three-dimensional reconstruction of the mark points based on image frames in the image frame set that comprise a mark point pattern, to obtain multiple frames of mark point three-dimensional point cloud, and determining a first coordinate transformation relationship between the multiple frames of the mark point three-dimensional point cloud;
performing three-dimensional reconstruction of the target object based on image frames in the image frame set that comprise a structured light pattern, to obtain multiple frames of target object three-dimensional point cloud;
for each frame of the target object three-dimensional point cloud, determining a second coordinate transformation relationship between the frame of the target object three-dimensional point cloud and one frame of the mark point three-dimensional point cloud, and stitching the multiple frames of the target object three-dimensional point cloud based on the first coordinate transformation relationship and the second coordinate transformation relationship.

According to a second aspect of embodiments of the present application, a three-dimensional reconstruction apparatus is provided, the three-dimensional reconstruction apparatus includes:
an acquisition module, configured to acquire an image frame set collected by a three-dimensional scanning device during a scanning process of a target object, wherein a surface of the target object is provided with mark points, and structured light is projected onto the surface of the target object during at least part of the scanning process of the target object;
a three-dimensional reconstruction module, configured to perform three-dimensional reconstruction of the mark points based on image frames in the image frame set that comprise a mark point pattern, to obtain multiple frames of mark point three-dimensional point cloud, and determine a first coordinate transformation relationship between the multiple frames of the mark point three-dimensional point cloud; and perform three-dimensional reconstruction of the target object based on image frames in the image frame set that comprise a structured light pattern, to obtain multiple frames of target object three-dimensional point cloud;
a stitching module, configured to, for each frame of the target object three-dimensional point cloud, determine a second coordinate transformation relationship between the frame of the target object three-dimensional point cloud and one frame of the mark point three-dimensional point cloud, and stitch the multiple frames of the target object three-dimensional point cloud based on the first coordinate transformation relationship and the second coordinate transformation relationship.

According to a third aspect of embodiments of the present application, an electronic device is provided, where the electronic device includes a processor, a memory, and computer instructions stored in the memory and executable by the processor, where the processor implements the method mentioned in the first aspect when executing the computer instructions.

According to a fourth aspect of embodiments of the present application, a computer-readable storage medium is provided, where when the storage medium stores computer instructions are executed, the method mentioned in the first aspect is implemented.

In embodiments of the present application, mark points can be set on the surface of a target object, and structured light is projected onto the surface of the target object during at least part of the scanning process of the target object, to acquire an image frame set of the target object. Then, multiple frames of mark point three-dimensional point cloud can be reconstructed based on image frames containing a mark point pattern, and multiple frames of target object three-dimensional point cloud can be reconstructed based on image frames containing a structured light pattern. As the coordinate transformation relationship between the multiple frames of mark point three-dimensional point cloud can be accurately determined, and the coordinate transformation relationship between the a single frame of mark point three-dimensional point cloud and a single frame of target object three-dimensional point cloud can also be determined, the mark points can further be used to assist in stitching the multiple frames of the target object three-dimensional point cloud, to obtain a more accurate stitching result.

It should be understood that the above general description and the following detailed description are examples and explanatory only and are not restrictive of the embodiments of the present application.

### BRIEF DESCRIPTION OF DRAWINGS

The drawings herein are incorporated into and constitute a part of this specification, illustrate embodiments consistent with the embodiments of the present application, and together with the description serve to explain the technical solutions of the embodiments of the present application.
FIG. 1 is a schematic diagram of an application scenario according to an embodiment of the present application.
FIG. 2 is a flowchart of a three-dimensional reconstruction method according to an embodiment of the present application.
FIG. 3 is a schematic diagram of mark points according to an embodiment of the present application.
FIG. 4 is a schematic diagram of mark points being occluded by a structured light pattern according to an embodiment of the present application.
FIG. 5 is a schematic diagram of simultaneously acquiring a structured light pattern and a mark point pattern according to an embodiment of the present application.
FIG. 6 is a schematic diagram of acquiring a structured light pattern and a mark point pattern in time order according to an embodiment of the present application.
FIG. 7 is another schematic diagram of acquiring a structured light pattern and a mark point pattern in time order according to an embodiment of the present application.
FIG. 8 is a schematic diagram of a three-dimensional reconstruction apparatus according to an embodiment of the present application.
FIG. 9 is a schematic diagram of a logical structure of an electronic device according to an embodiment of the present application.

### DETAILED DESCRIPTION

Example embodiments will be described in detail here, examples of which are illustrated in the accompanying drawings. When the following description refers to the drawings, the same numbers in different drawings denote the same or similar elements unless otherwise indicated. The implementations described in the following example embodiments do not represent all implementations consistent with the embodiments of the present application. On the contrary, they are merely examples of apparatuses and methods consistent with some aspects of the embodiments of the present application as detailed in the appended claims.

The terminology used in the embodiments of the present application is for the purpose of describing particular embodiments only and is not intended to limit the embodiments of the present application. The singular forms "a", "said" and "the" used in the embodiments of the present application and the appended claims are also intended to include the plural forms, unless the context clearly indicates otherwise. It should also be understood that the term "and/or" as used herein refers to and includes any and all possible combinations of one or more of the associated listed items. Furthermore, the term "at least one" as used herein indicates any one of a plurality or any combination of at least two of a plurality.

It is to be understood that although terms such as first, second, third, etc. may be used in the embodiments of the present application to describe various information, this information should not be limited to these terms. These terms are only used to distinguish information of the same type from each other. For example, first information may also be referred to as second information, and similarly, second information may also be referred to as first information without departing from the scope of the embodiments of the present application. Depending on the context, the word "if" as used herein may be interpreted as "when" or "upon" or "in response to determining".

To enable those skilled in the art to better understand the technical solutions in the embodiments of the present application and to make the above-described objectives, features, and advantages of the embodiments of the present application more obvious and easier to understand, the technical solutions in the embodiments of the present application are further described in detail below in conjunction with the accompanying drawings.

By projecting optically encoded patterns (such as, structured light) onto the target object to be reconstructed and based on the deformed patterns of the structured light collected by the camera, the three-dimensional reconstruction technology based on structured light determines depth information on the surface of a target object to restore three-dimensional surface data of the target object. The three-dimensional reconstruction technology based on structured light has characteristics such as high efficiency and anti-interference and is widely used in various three-dimensional reconstruction scenarios. During the scanning process, limited by a projection area of the structured light or a camera's field of view, often a single measurement can only obtain a partial three-dimensional point cloud of the target object. To obtain the global three-dimensional point cloud of the target object, the partial point cloud needs to be collected from multiple perspectives, and the collected partial point cloud needs to be stitched.

Currently, a commonly used stitching manner includes geometric stitching, which utilizes the geometric features of the target object itself for stitching. This stitching manner requires the target object to have rich and non-repetitive geometric features. When scanning some geometrically regular target objects, such as cylindrical abutments, implant posts, scan bodies, and other target objects with repetitive geometric features or weak feature information, due to the limited number of feature points extracted, high-precision stitching results cannot be calculated, resulting in poor accuracy of the finally reconstructed three-dimensional model.

To improve stitching accuracy, embodiments of the present application propose that for some geometrically regular target objects with weak feature information, mark points can be set on the surface of the target object, and structured light is projected onto the surface of the target object during at least part of the scanning process of the target object, to collect an image frame set of the target object. Then, multiple frames of mark point three-dimensional point cloud are reconstructed based on image frames containing a mark point pattern, and multiple frames of target object three-dimensional point cloud is reconstructed based on image frames containing a structured light pattern. As the coordinate transformation relationship between the multiple frames of the mark point three-dimensional point cloud can be accurately determined, and the coordinate transformation relationship between a single frame of the mark point three-dimensional point cloud and a single frame of the target object three-dimensional point cloud can also be determined, the mark points can further be used to assist in stitching the multiple frames of target object three-dimensional point cloud, to obtain a more accurate stitching result. It shall be noted that, in some embodiments, three-dimensional point cloud is adopted to describe spatial position information of the mark point or the target object, and in some other embodiments, other types of three-dimensional data may also be adopted to describe spatial position information of the mark point or the target object, such as mesh data, voxel data and depth map, which is not limited in the present disclosure.

The three-dimensional reconstruction method provided by embodiments of the present application may be executed by a three-dimensional scanning device, or by other devices connected to the three-dimensional scanning device through wired or wireless means. The other devices may be mobile phones, tablets, laptops, cloud servers, or server clusters, etc.

For example, in some scenarios, if the three-dimensional scanning device possesses high computing power, the three-dimensional scanning device can collect images of the target object and use the collected images to perform three-dimensional reconstruction of the target object to obtain a three-dimensional model of the target object.

In some scenarios, if the three-dimensional scanning device has low computing power, three-dimensional reconstruction can be achieved with the assistance of other devices. For example, scanning software can be installed on the other device, and the scanning software can perform real-time three-dimensional reconstruction based on images collected by the three-dimensional scanning device and display the reconstruction results to the user.

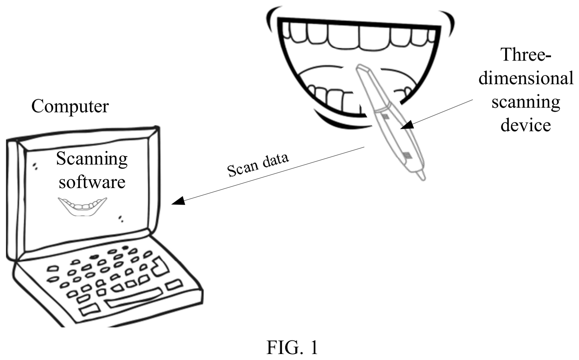

For example, as shown in FIG. 1, which is a schematic diagram of an application scenario according to an embodiment of the present application, considering that the three-dimensional scanning device (shown as an oral scanner in the figure) has low computing power, the images collected by the three-dimensional scanning device are usually sent to a terminal device (e.g., a laptop) with better processing performance that is communicatively connected to the three-dimensional scanning device. The terminal device can install scanning software, which performs real-time three-dimensional reconstruction based on the collected images and displays the reconstruction results to the user.

The three-dimensional scanning device in the embodiments of the present application may be an oral scanner, a facial scanner, an industrial scanner, a professional scanner, etc., and can be used for three-dimensional scanning and three-dimensional reconstruction of items such as teeth, human faces, human bodies, industrial products, industrial equipment, cultural relics, artworks, prosthetics, medical instruments, and buildings.

The target object in the embodiments of the present application may be various objects to be reconstructed provided with mark points, for example, teeth, implant posts, scan bodies, abutments, industrial products, etc., which are not limited in the embodiments of the present application.

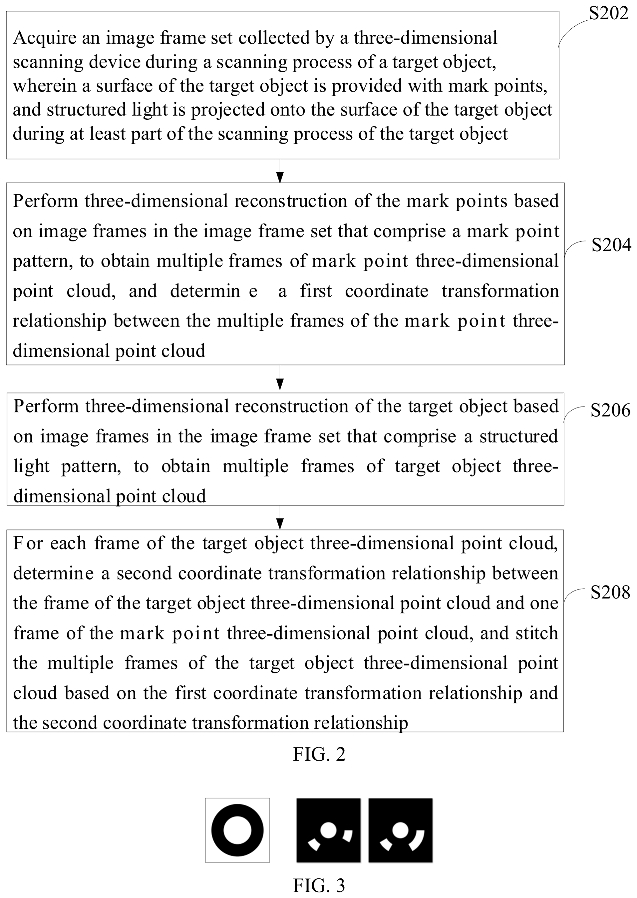

As shown in FIG. 2, the three-dimensional reconstruction method may include following steps S202-S208.

In S202, acquiring an image frame set collected by a three-dimensional scanning device during a scanning process of a target object, wherein a surface of the target object is provided with mark points, and structured light is projected onto the surface of the target object during at least part of the scanning process of the target object.

In step S202, an image frame set collected by a three-dimensional scanning device during a scanning process of a target object can be acquired, where the image frames in the image frame set can be collected by one or more cameras. The surface of the target object is provided with mark points, which can be formed on the surface of the target object through various manners such as projection, spraying, or pasting. The shape, color, quantity, size, etc., of the mark points can be set based on actual requirements and are not limited in the embodiments of the present application. As shown in FIG. 3, in some scenarios, the mark point may not carry encoding information (the leftmost marker in FIG. 3). In some scenarios, to better distinguish each mark point on the surface of the target object, the mark points may also carry encoding information (the two right markers in FIG. 3).

To obtain depth information on the surface of the target object, structured light is projected onto the surface of the target object during at least part of the scanning process of the target object. The structured light can be in patterns such as dot arrays, lines, or light spots, and is not limited in the embodiments of the present application.

Structured light can be projected onto the target object throughout the entire scanning process, or only during part of the scanning process. For example, to ensure that each collected image frame includes a structured light pattern, structured light can be projected onto the target object throughout the entire scanning process. Of course, in some scenarios, to have some image frames not include a structured light pattern, structured light may not be projected onto the target object at certain moments.

S204, performing three-dimensional reconstruction of the mark points based on image frames in the image frame set that comprise a mark point pattern, to obtain multiple frames of mark point three-dimensional point cloud, and determining a first coordinate transformation relationship between the multiple frames of the mark point three-dimensional point cloud.

In step S204, after acquiring the image frame set, image frames including mark point patterns can be obtained from the image frames. Three-dimensional reconstruction of the mark points is performed based on the image frames including mark point patterns to obtain multiple frames of mark point three-dimensional point cloud (three-dimensional point cloud of the mark points), where one image frame including a mark point pattern corresponds to one frame of the mark point three-dimensional point cloud.

For example, in some scenarios, the three-dimensional scanning device includes at least two cameras. The at least two cameras can be used to perform image collection of the mark points on the surface of the target object to obtain multiple image frame sequences including the mark points. For each mark point, based on the parallax of the pixel points of the mark point in the images collected by the at least two cameras, the depth information of the pixel points corresponding to the mark point can be obtained. Furthermore, the three-dimensional coordinates of the mark point can be determined. Through the above manner, the three-dimensional point cloud corresponding to the mark points in each image frame can be determined. Then, based on the three-dimensional coordinates of the same mark point in the three-dimensional point clouds of different image frames, the coordinate transformation relationship between different image frames (i.e., the three-dimensional point clouds of mark points of different frames) can be determined, hereinafter referred to as the first coordinate transformation relationship.

In some scenarios, the three-dimensional scanning device may only include a single camera. Then, the single camera can be used to collect images of the mark points from different perspectives. For each mark point, based on the parallax of the pixel points corresponding to that mark point in the images collected by the camera from different perspectives, the depth information of the pixel points corresponding to that mark point can be obtained, thereby determining a single frame of three-dimensional point cloud of the mark points corresponding to each image frame and determining the first coordinate transformation relationship between the multiple frames of three-dimensional point clouds of the mark points.

In some scenarios, the three-dimensional coordinates of each mark point may be the three-dimensional coordinates of a center of the mark point pattern. For example, taking the encoded mark point shown in FIG. 3 as an example, the mark point may be composed of different patterns. For such mark points, a center point can be extracted from the mark point pattern, and three-dimensional reconstruction can be performed on the center point. The coordinates of the reconstructed center point are used as the three-dimensional coordinates of the mark point.

S206, performing three-dimensional reconstruction of the target object based on image frames in the image frame set that comprise a structured light pattern, to obtain multiple frames of target object three-dimensional point cloud.

In step S206, after acquiring the image frame set, image frames including structured light patterns can be obtained from the image frame set. Then, three-dimensional reconstruction of the target object is performed based on these image frames to obtain multiple frames of target object three-dimensional point cloud (three-dimensional point cloud of the target object). For each image frame, the depth information of the surface of the target object in the image frame can be determined based on the structured light pattern in the image frame, thereby obtaining a single frame of target object three-dimensional point cloud. The image frames including structured light patterns can also be collected by one or more cameras.

S208, for each frame of the target object three-dimensional point cloud, determining a second coordinate transformation relationship between the frame of the target object three-dimensional point cloud and one frame of the mark point three-dimensional point cloud, and stitching the multiple frames of the target object three-dimensional point cloud based on the first coordinate transformation relationship and the second coordinate transformation relationship.

In step S208, as the coordinate transformation relationship between different frames of the mark point three-dimensional point cloud can be determined, the coordinate transformation relationship between the different frames of the target object three-dimensional point clouds can be determined with the assistance of the coordinate transformation relationship between the different frames of the mark point three-dimensional point cloud. For example, for each frame of the target object three-dimensional point cloud, the coordinate transformation relationship between the frame of the target object three-dimensional point cloud and a frame of mark point three-dimensional point cloud can be determined, which is referred to as the second coordinate transformation relationship for ease of distinction. There is a certain relationship between the frame of mark point three-dimensional point cloud and the frame of the target object three-dimensional point cloud. For example, the frame of mark point three-dimensional point cloud and the frame of the target object three-dimensional point cloud are reconstructed based on a same image frame, or the frame of mark point three-dimensional point cloud and the frame of the target object three-dimensional point cloud are collected by different cameras at the same time, or the collection time interval between the frame of mark point three-dimensional point cloud and the frame of the target object three-dimensional point cloud is short, etc. Then, the coordinate transformation relationship between the multiple frames of the target object three-dimensional point clouds can be determined based on the first coordinate transformation relationship and the second coordinate transformation relationship, thereby unifying the coordinate systems of the multiple frames of target object three-dimensional point cloud to stitch the multiple frames of the target object three-dimensional point cloud.

By setting mark points on the surface of the target object, as the coordinate transformation relationship between the multiple frames of the mark point three-dimensional point cloud can be accurately determined, the mark points can be used to assist in accurate stitching between the different frames of the target object three-dimensional point cloud to obtain accurate stitching results.

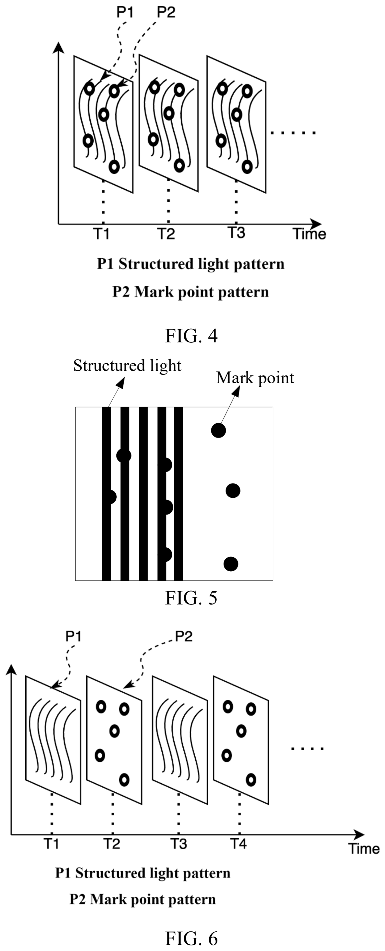

In some embodiments, as shown in FIG. 4, the three-dimensional scanning device can simultaneously collect the structured light pattern and the mark point pattern projected onto the surface of the target object when scanning the target object. That is, the image frame set includes a plurality of composite image frames, and each composite image frame includes both a structured light pattern and a mark point pattern. As the structured light pattern and the mark point pattern are located in the same image frame, the coordinate transformation relationship between any two frames of the target object three-dimensional point cloud can be determined through the mark points in the two image frames corresponding to these two frames of the target object three-dimensional point cloud. For example, assume the image frame set includes composite image frame A and composite image frame B. Based on the structured light pattern in composite image frame A, a single frame of target object three-dimensional point cloud P1 can be reconstructed. Based on the structured light pattern in composite image frame B, a single frame of target object three-dimensional point cloud P2 can be reconstructed. Based on the mark point pattern in composite image frame A, a single frame of mark point three-dimensional point cloud O1 can be reconstructed. Based on the mark point pattern in composite image frame B, a single frame of mark point three-dimensional point cloud O2 can be reconstructed. As the coordinate transformation relationship R1 between O1 and O2 can be determined, the coordinate transformation relationship R2 between P1 and P2 can also be determined, i.e., R2 is same as R1.

As shown in FIG. 5, for scenarios where the beams or spots of structured light are relatively dense, or where the structured light is black and white stripes, if a same image frame includes both a structured light pattern and a mark point pattern, the mark points on the surface of the target object are often occluded by the structured light pattern, making it impossible to extract these mark points from the image subsequently, or the extracted mark points are inaccurate, leading to inaccurate stitching results obtained based on the mark points, and consequently, poor accuracy of the reconstructed three-dimensional model.

To reduce the occlusion of mark points by the structured light pattern, in some embodiments, the density of the structured light pattern in the composite image frame is determined based on a size of the mark points. That is, for scenarios where structured light patterns and mark point patterns are collected simultaneously, the density of the structured light projected onto the surface of the target object can be determined based on the size of the mark points set on the surface of the target object, to minimize occlusion of mark points by the structured light patterns. For example, taking line structured light as an example, the distance between adjacent lines can be made larger than the size of the mark point, so that the mark point can be located between the lines, thereby reducing occlusion.

In some embodiments, to avoid occlusion of mark points by the structured light pattern, different cameras can be used to respectively collect the mark point pattern and the structured light pattern on the surface of the target object, or the same camera can be used to alternately collect the mark point pattern and the structured light pattern on the surface of the target object, so that the mark point pattern and the structured light pattern are located in different image frames. That is, the image frame set includes a plurality of structured light image frames and a plurality of mark point image frames. Each structured light image frame only includes structured light patterns, and each mark point image frame only includes mark point patterns. The structured light image frames can be collected by one or more cameras, and the mark point image frames can be collected by one or more cameras. The structured light image frames and the mark point image frames can be collected by the same camera or by different cameras.

Therefore, in some embodiments, when projecting a structured light pattern onto the surface of the target object, the collection manner of the two patterns can also be determined based on the density of the structured light pattern projected by the three-dimensional scanning device. For example, when the density of the structured light pattern projected by the three-dimensional scanning device is less than a preset density, a same camera can simultaneously collect the structured light pattern and the mark point pattern. That is, the image frame set includes the composite image frames. When the density of the structured light pattern projected by the three-dimensional scanning device is greater than or equal to the preset density, the same camera can alternately collect the structured light pattern and the mark point pattern, or different cameras can respectively collect the structured light pattern and the mark point pattern. That is, the image frame set includes the structured light image frames and the mark point image frames.

In scenarios where the structured light pattern projected by the three-dimensional scanning device is relatively sparse, i.e., the density is lower than the preset density, a collection manner where the same camera simultaneously collects the structured light pattern and the mark point pattern can be used. As the structured light pattern and the mark point pattern are located in the same image frame, the coordinate systems of the mark point three-dimensional point cloud and the target object three-dimensional point cloud reconstructed based on the same image frame are the same. That is, the coordinate transformation relationship between different frames of the target object three-dimensional point cloud can be quickly determined, thereby improving point cloud stitching efficiency. In scenarios where the structured light pattern projected by the three-dimensional scanning device is relatively dense, i.e., the density is greater than or equal to the preset density, the same camera is used to alternately collect the structured light pattern and the mark point pattern, or different cameras are used to respectively collect the structured light pattern and the mark point pattern, which can make the structured light pattern and the mark point pattern located in different images, avoiding occlusion of mark points by the structured light pattern, thereby extracting mark points from the image more accurately and improving stitching accuracy.

In an embodiment, the three-dimensional scanning device includes a structured light projector for projecting structured light onto the target object. When the three-dimensional scanning device scans the target object, the device first collects one or more initial images, calculates the required density of the structured light pattern based on the width or diameter of the mark points scanned in the initial images and the collection manner preset by the user, and adjusts the parameters of the structured light projector to modify the subsequently projected pattern.

In some embodiments, the three-dimensional scanning device includes a structured light projector for projecting structured light onto the target object, and a fill light for supplementing light for the target object. The composite image frames are acquired when the structured light projector is in an ON state and the fill light is in an ON state. For example, for scenarios with low scanning environment brightness, the fill light needs to be turned on for the camera to clearly collect images of the mark points. For example, taking scanning a scan body inside an oral cavity as an example, the inside of the oral cavity usually has low brightness, and the fill light needs to be turned on to clearly photograph the mark points. Therefore, to simultaneously collect the structured light pattern and the mark point pattern, image collection of the target object can be performed when the structured light projector is in an ON state and the fill light is in an ON state to obtain the above composite image frames. The fill light may be an LED (light-emitting diode) light.

In some embodiments, the image frame set includes at least one first image frame sequence. Each of the first image frame sequence is acquired by one camera in the three-dimensional scanning device. Each of the first image frame sequence includes a plurality of structured light image frames and a plurality of mark point image frames. The structured light image frames and the mark point image frames are acquired by the camera alternately. For example, taking a three-dimensional scanning device including a monocular camera as an example, the monocular camera can be used to perform image collection of the mark point pattern and the structured light pattern in a time order to obtain one first image frame sequence. Taking a three-dimensional scanning device including multiple cameras (such as binocular, trinocular, or quadocular or more) as an example, each camera can be controlled to perform image collection of the mark point pattern and the structured light pattern in a time order to obtain multiple first image frame sequences. For scenarios where the three-dimensional scanning device includes multiple cameras (such as binocular, trinocular, or quadocular or more), the mark points can be simultaneously imaged from different perspectives using the multiple cameras at the same moment. Then, the depth information of the mark points can be more accurately determined through manners such as triangulation to perform three-dimensional reconstruction of the mark points.

In some embodiments, the three-dimensional scanning device includes a structured light projector for projecting structured light onto the target object, and a fill light for supplementing light for the target object. The structured light image frames are acquired when the structured light projector is in an ON state and the fill light is in an OFF state. The mark point image frames are acquired when the structured light projector is in an OFF state and the fill light is in an ON state. For example, for scenarios with low scanning environment brightness, the fill light needs to be turned on for the camera to clearly collect images of the mark points. Therefore, the ON/OFF states of the structured light projector and the fill light can be controlled in a time order, so that the same camera can collect the structured light pattern and the mark point pattern in the time order.

In some embodiments, the three-dimensional scanning device includes a structured light projector. The structured light projector includes a structured light mode for projecting structured light and a uniform light mode for projecting uniform light. The structured light image frames are acquired when the structured light projector is in the structured light mode. The mark point image frames are acquired when the structured light projector is in the uniform light mode. For some structured light projectors, they include multiple projection modes. That is, they can project structured light with encoding information and also project unstructured uniform light. The uniform light can be white light or colored light such as blue light or red light. Therefore, the uniform light projected by the projector can be used to supplement light for the target object, eliminating the need to additionally set up a fill light in the three-dimensional scanning device and simplifying the structure of the three-dimensional scanning device.

For scenarios where structured light image frames and mark point image frames are collected in a time order, as the structured light image frames and mark point image frames are collected by the camera at different poses, and considering that the camera usually moves at a uniform speed, motion estimation of the camera can be performed based on at least two adjacent image frames of the same type to determine the pose transformation when the camera collects two adjacent images. Thus, the coordinate transformation relationship between structured light image frame A and adjacent mark point image frame B can be determined, which is the coordinate transformation relationship between the single frame of target object three-dimensional point cloud corresponding to structured light image frame A and the single frame of mark point three-dimensional point cloud corresponding to mark point image frame B.

The manner for performing motion estimation of the camera may include various types. In some scenarios, an ICP (Iterative Closest Point) algorithm can be used to determine the camera motion relationship between adjacent frames. Of course, other algorithms can also be used, which are not limited in the embodiments of the present application.

Therefore, in some embodiments, if structured light image frames and mark point image frames are collected in a time order, for each frame of the target object three-dimensional point cloud, the coordinate transformation relationship between that frame of the target object three-dimensional point cloud and a frame of mark point three-dimensional point cloud can be determined. The mark point image frame corresponding to the frame of the mark point three-dimensional point cloud is adjacent to the structured light image frame corresponding to that frame of the target object three-dimensional point cloud. When determining the coordinate transformation relationship between that frame of the target object three-dimensional point cloud and the frame of the mark point three-dimensional point cloud, motion estimation can be performed on at least two adjacent image frames of the same type in the first image frame sequence to determine the pose transformation when the camera acquires the two adjacent image frames. The collection time interval between the at least two image frames of the same type and the structured light image frame corresponding to that frame of the target object three-dimensional point cloud is less than a preset time interval. Then, the second coordinate transformation relationship can be determined based on the pose transformation. Considering that during the scanning process, the motion of the camera can be considered uniform in a short time, to accurately estimate the coordinate transformation relationship between that frame of the target object three-dimensional point cloud and the frame of the mark point three-dimensional point cloud, the collection time of the at least two image frames of the same type should be as close as possible to the collection time of that frame of the target object three-dimensional point cloud. Moreover, as motion estimation requires the two image frames to include the same content, camera motion can be estimated based on at least two image frames of the same type. The at least two image frames of the same type can both be structured light image frames or both be mark point image frames.

In some embodiments, as shown in FIG. 6, the structured light image frames and the mark point image frames in each set of the first image frame sequence are interleaved. That is, the same camera can alternately collect the structured light pattern and the mark point pattern.

For the above collection manner, the following approach can be used to determine the different frames of the target object three-dimensional point cloud.

Assume the first image frame sequence includes: structured light image frame 1, mark point image frame 1, structured light image frame 2, mark point image frame 2, structured light image frame 3, mark point image frame 3...

The single-frame point clouds constructed based on each image frame are respectively: target object three-dimensional point cloud 1, mark point three-dimensional point cloud 1, target object three-dimensional point cloud 2, mark point three-dimensional point cloud 2, target object three-dimensional point cloud 3, mark point three-dimensional point cloud 3...

For the target object three-dimensional point cloud 1, a coordinate transformation relationship thereof with the mark point three-dimensional point cloud 1 can be determined. Specifically, motion estimation of the camera can be performed based on the target object three-dimensional point cloud 1 and the target object three-dimensional point cloud 2 to determine the pose transformation of the camera when collecting the target object three-dimensional point cloud 1 and the target object three-dimensional point cloud 2, which is denoted as R. Considering that the camera can be considered to move uniformly in a short time, the pose transformation between the target object three-dimensional point cloud 1 and the mark point three-dimensional point cloud 1 is R/2. This pose transformation is the coordinate transformation relationship between the target object three-dimensional point cloud 1 and the mark point three-dimensional point cloud 1.

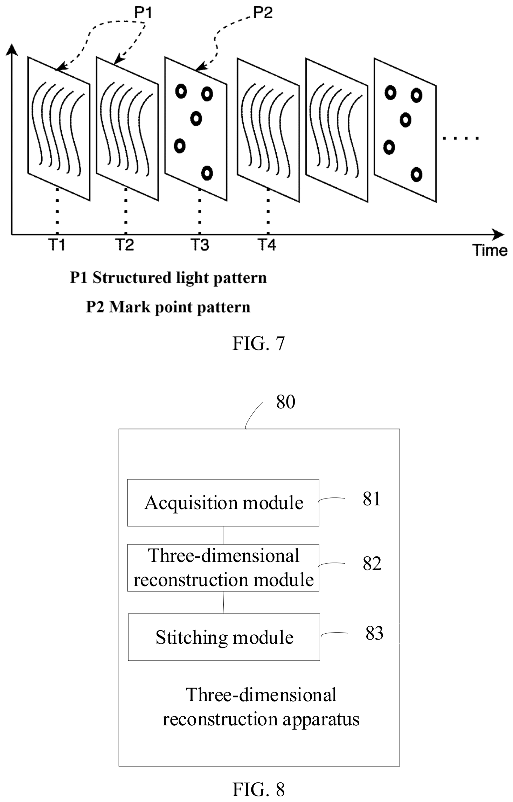

In some embodiments, as shown in FIG. 7, each first image frame sequence includes repeated image groups. Each image group includes the structured light image frame and the mark point image frame, and each image group includes at least two consecutive image frames of the same type.

Considering that the camera can usually be considered to move uniformly only in a short time, to more accurately perform motion estimation of the camera, when collecting structured light image frames or mark point image frames in a time order, the camera can be controlled to continuously collect at least two image frames of the same type before collecting another type of image frame, and then repeat the above collection order to obtain multiple image groups. For example, at least two structured light image frames can be collected continuously before collecting a mark point image frame, or at least two mark point image frames can be collected continuously before collecting a structured light image frame. Thus, motion estimation of the camera can be performed based on the at least two structured light image frames (or at least two mark point image frames) to determine the motion information of the camera. This motion information can serve as the motion information of the camera when collecting the image groups, facilitating the determination of the pose transformation when the camera collects adjacent structured light image frames and mark point image frames within that image group.

Considering that image frames within the same image group share the same motion information, to ensure the motion information is as accurate as possible, the consecutive image frames of the same type in an image group can include only two frames. For example, in some embodiments, each image group includes two consecutive structured light image frames and one mark point image frame. In some embodiments, each image group includes two consecutive mark point image frames and one structured light image frame. As the collection time interval is short, applying the camera motion information determined using the two consecutive structured light image frames (or two consecutive mark point image frames) to the structured light image frame and the adjacent mark point image frame within the image group will be relatively accurate.

For example, for the above collection manner, the following approach can be used to determine the different frames of the target object three-dimensional point cloud.

Assume the first image frame sequence includes: structured light image frame 1, structured light image frame 2, mark point image frame 1, structured light image frame 3, structured light image frame 4, mark point image frame 2, structured light image frame 5, structured light image frame 6, mark point image frame 3...

The single-frame point cloud constructed based on each image frame are: target object three-dimensional point cloud 1, target object three-dimensional point cloud 2, mark point three-dimensional point cloud 1, target object three-dimensional point cloud 3, target object three-dimensional point cloud 4, mark point three-dimensional point cloud 2, target object three-dimensional point cloud 5, target object three-dimensional point cloud 6, mark point three-dimensional point cloud 3...

Motion estimation can be performed based on the target object three-dimensional point cloud 1 and the target object three-dimensional point cloud 2 to determine the pose transformation of the camera. Then, this pose transformation is taken as the pose transformation when the camera collects the target object three-dimensional point cloud 2 and the mark point three-dimensional point cloud 1. Considering that the collection time interval of the above three frames of point clouds is very short, that is, the movement speed of the camera when collecting the target object three-dimensional point cloud 1 and the target object three-dimensional point cloud 2 can be considered consistent with the movement speed of the camera when collecting the target object three-dimensional point cloud 2 and the mark point three-dimensional point cloud 1. Therefore, the pose transformation of the camera when collecting the target object three-dimensional point cloud 2 and the mark point three-dimensional point cloud 1 determined in this way is relatively accurate.

In some embodiments, to have the structured light pattern and the mark point pattern distributed in different image frames, different cameras can also be used to respectively perform image collection of the structured light pattern and the mark point pattern. For example, the image frame set includes a second image frame sequence and a third image frame sequence. The second image frame sequence includes the structured light image frames. The third image frame sequence includes the mark point image frames. The second image frame sequence and the third image frame sequence are respectively acquired by two cameras in the three-dimensional scanning device. Considering that different cameras have different response characteristics to light beams of different bands, the structured light projected by the structured light projector and the light beam projected by the fill light can be set as light beams of different bands, for example, light beam 1 and light beam 2. Then, two cameras, camera 1 and camera 2, are set in the three-dimensional scanning device. The sensor in camera 1 can only sense light beam 1, and the sensor in camera 2 can only sense light beam 2. Therefore, when both the structured light projector and the fill light are in an ON state, the two cameras can be used to simultaneously perform image collection of the target object. Camera 1 acquires structured light image frames, and camera 2 acquires mark point image frames.

In some embodiments, when structured light image frames and mark point image frames are respectively collected by two cameras, for each frame of the target object three-dimensional point cloud, the coordinate transformation relationship between that frame of the target object three-dimensional point cloud and a frame of mark point three-dimensional point cloud can be determined. The collection time of the frame of the mark point three-dimensional point cloud is the same as the collection time of that frame of the target object three-dimensional point cloud. When determining the second coordinate transformation relationship between that frame of the target object three-dimensional point cloud and the frame of the mark point three-dimensional point clou, the second coordinate transformation relationship between that frame of the target object three-dimensional point cloud and the frame of the mark point three-dimensional point cloud can be determined based on pre-calibrated extrinsic parameters of the two cameras. That is, as structured light image frames and mark point image frames are simultaneously collected by two cameras, their coordinate transformation relationship can be determined through the extrinsic parameters of the two cameras.

In some embodiments, the three-dimensional scanning device is an oral scanner, and the target object is an oral cavity. The oral cavity has a scan body installed, with mark points set on the scan body; or, mark points are pasted on the teeth/gums within the oral cavity; or the oral cavity has a target installed, with mark points set on the target.

In some embodiments, the three-dimensional scanning device is a facial scanner, and the target object is a face. Mark points are pasted on the face, or the face has a target installed with mark points set on the target.

In some embodiments, the three-dimensional scanning device is a handheld scanner, and the target object is an industrial product, cultural relic, or building. Mark points are pasted, projected, or sprayed on the industrial product, cultural relic, or building, etc., being scanned.

In some embodiments, after stitching the multiple frames of the target object three-dimensional point cloud based on the first coordinate transformation relationship and the second coordinate transformation relationship, a currently stitched three-dimensional model of the target object can be displayed in real-time on an interactive interface. The three-dimensional model may have a texture map applied or may not have a texture map applied.

In some embodiments, the three-dimensional scanning device is an oral scanner, and the target object is an edentulous oral cavity. The oral cavity has a scan body installed, with mark points set on the scan body. As the scanning process advances, the interactive interface gradually displays the scan body and the edentulous oral cavity. The scan body can, according to user needs, display or not display the applied mark point texture image, meeting user development requirements. In some embodiments, the three-dimensional scanning device may be an intraoral scanner or an extraoral scanner, or a camera installed on an implant mobile phone. Therefore, a user may use the scanning device such as the intraoral scanner or the extraoral scanner or the camera installed on the implant mobile phone to scan the oral cavity to obtain the image frame set.

It shall be understood that the solutions described in the above embodiments can be freely combined when there is no conflict to obtain new solutions, which are not listed one by one in the embodiments of the present application for the sake of brevity.

Correspondingly, embodiments of the present application also provide a three-dimensional reconstruction apparatus. As shown in FIG. 8, the three-dimensional reconstruction apparatus 80 includes:
an acquisition module 81, configured to acquire an image frame set collected by a three-dimensional scanning device during a scanning process of a target object, wherein a surface of the target object is provided with mark points, and structured light is projected onto the surface of the target object during at least part of the scanning process of the target object
a three-dimensional reconstruction module 82, configured to perform three-dimensional reconstruction of the mark points based on image frames in the image frame set that comprise a mark point pattern, to obtain multiple frames of mark point three-dimensional point cloud, and determine a first coordinate transformation relationship between the multiple frames of the mark point three-dimensional point cloud; and perform three-dimensional reconstruction of the target object based on image frames in the image frame set that comprise a structured light pattern, to obtain multiple frames of target object three-dimensional point cloud;
a stitching module 83, configured to, for each frame of the target object three-dimensional point cloud, determine a second coordinate transformation relationship between the frame of the target object three-dimensional point cloud and one frame of the mark point three-dimensional point cloud, and stitch the multiple frames of the target object three-dimensional point cloud based on the first coordinate transformation relationship and the second coordinate transformation relationship.

The specific steps for the above apparatus to execute the task processing method can refer to the description in the above method embodiments and will not be repeated herein.

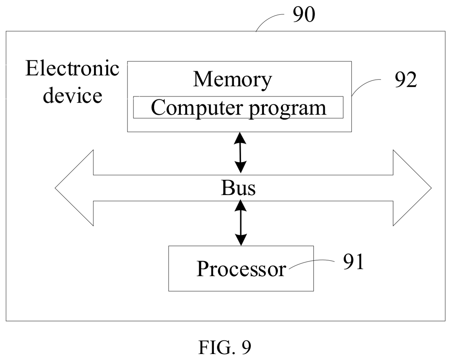

Furthermore, embodiments of the present application also provide an electronic device. As shown in FIG. 9, the device includes a processor 91, a memory 92, and computer instructions stored in the memory 92 and executable by the processor 91. The processor 91 implements the method according to any one of the foregoing embodiments when executing the computer instructions. In some embodiments, the electronic device may cooperate with a scanning device. The electronic device and the scanning device may be separately arranged and communicate through wired or wireless means. The electronic device may be a computer, a tablet computer and/or a mobile phone, etc., and the scanning device may be an oral scanner (an intraoral scanner or an extraoral scanner) or a camera installed on an implant mobile phone, etc. In some embodiments, the electronic device may be arranged in the scanning device. In some embodiments, other types of devices may also be included.

Embodiments of the present application also provide a computer-readable storage medium having a computer program stored thereon. The program, when executed by a processor, implements the method according to any one of the foregoing embodiments.

Computer-readable media include both permanent and non-permanent, removable and non-removable media, and information storage can be implemented by any method or technology. Information can be computer-readable instructions, data structures, program modules, or other data. Examples of computer storage media include, but are not limited to, phase-change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disc read-only memory (CD-ROM), digital versatile disc (DVD) or other optical storage, magnetic cassettes, magnetic tape, magnetic disk storage or other magnetic storage devices, or any other non-transitory medium that can be used to store information accessible by a computing device. As defined herein, computer-readable media do not include transitory media, such as modulated data signals and carrier waves.

From the above description of the embodiments, it can be clearly understood by those skilled in the art that the embodiments of the present application can be implemented by means of software plus a necessary general hardware platform. Based on this understanding, the technical solution of the embodiments of the present application, in essence or the part contributing to the prior art, can be embodied in the form of a software product. This computer software product can be stored in a storage medium, such as ROM/RAM, magnetic disks, optical discs, etc., and includes several instructions to cause a computer device (which may be a personal computer, server, or network device, etc.) to execute the methods described in the various embodiments or some parts of the embodiments of the present application.

The systems, apparatuses, modules, or units illustrated in the above embodiments may be implemented specifically by computer chips or entities, or by products with certain functions. A typical implementation device is a computer. The specific form of the computer may be a personal computer, laptop computer, cellular phone, camera phone, smartphone, personal digital assistant, media player, navigation device, email device, game console, tablet computer, wearable device, or any combination of these devices.

The various embodiments in this specification are described in a progressive manner, and the same or similar parts between the various embodiments can be referred to each other, with each embodiment focusing on the differences from other embodiments. In particular, for the apparatus embodiments, since they are basically similar to the method embodiments, the description is relatively simple. For relevant parts, reference can be made to the partial description of the method embodiments. The described apparatus embodiments are merely illustrative. The modules described as separate components may or may not be physically separate. When implementing the solution of the embodiments of the present application, the functions of each module can be implemented in the same one or more software and/or hardware. It is also possible to select some or all of the modules to achieve the purpose of the embodiments of this solution according to actual needs. Those of ordinary skill in the art can understand and implement it without making creative effort.

The above descriptions are only specific implementations of the embodiments of the present application. It should be noted that for those skilled in the art, without departing from the principles of the embodiments of the present application, several improvements and modifications can be made, and these improvements and modifications should also be considered as the protection scope of the embodiments of the present application.

## Claims

1. A three-dimensional reconstruction method, comprising:
acquiring an image frame set collected by a three-dimensional scanning device during a scanning process of a target object, wherein a surface of the target object is provided with mark points, and structured light is projected onto the surface of the target object during at least part of the scanning process of the target object;
performing three-dimensional reconstruction of the mark points based on image frames in the image frame set that comprise a mark point pattern, to obtain multiple frames of mark point three-dimensional point cloud, and determining a first coordinate transformation relationship between the multiple frames of the mark point three-dimensional point cloud;
performing three-dimensional reconstruction of the target object based on image frames in the image frame set that comprise a structured light pattern, to obtain multiple frames of target object three-dimensional point cloud; and
for each frame of the target object three-dimensional point cloud, determining a second coordinate transformation relationship between the frame of the target object three-dimensional point cloud and one frame of the mark point three-dimensional point cloud, and stitching the multiple frames of the target object three-dimensional point cloud based on the first coordinate transformation relationship and the second coordinate transformation relationship.

2. The method according to claim 1, wherein
the image frame set comprises structured light image frames and mark point image frames, wherein each of the structured light image frames only comprises the structured light pattern, and each of the mark point image frames only comprises the mark point pattern; or
the image frame set comprises composite image frames, wherein each of the composite image frames comprises both the structured light pattern and the mark point pattern.

3. The method according to claim 2, wherein a density of the structured light pattern in the composite image frames is determined based on a size of the mark points.

4. The method according to claim 2, wherein when a density of the structured light pattern projected by the three-dimensional scanning device is less than a preset density, the image frame set comprises the composite image frames; and
when the density of the structured light pattern projected by the three-dimensional scanning device is greater than or equal to the preset density, the image frame set comprises the structured light image frames and the mark point image frames.

5. The method according to claim 2, wherein the three-dimensional scanning device comprises a structured light projector for projecting the structured light onto the target object, and a fill light for supplementing light for the target object; the composite image frames are acquired when the structured light projector is in an ON state and the fill light is in an ON state.

6. The method according to claim 2, wherein the image frame set comprises at least one first image frame sequence, wherein each of the at least one first image frame sequence is acquired by one camera in the three-dimensional scanning device, and comprises the structured light image frames and the mark point image frames, and the structured light image frames and the mark point image frames are acquired alternately by the camera.

7. The method according to claim 6, wherein the three-dimensional scanning device comprises a structured light projector for projecting the structured light onto the target object, and a fill light for supplementing light for the target object; wherein the structured light image frames are acquired when the structured light projector is in an ON state and the fill light is in an OFF state, the mark point image frames are acquired when the structured light projector is in an OFF state and the fill light is in an ON state.

8. The method according to claim 6, wherein the three-dimensional scanning device comprises a structured light projector, wherein the structured light projector comprises a structured light mode for projecting structured light, and a uniform light mode for projecting uniform light; wherein the structured light image frames are acquired when the structured light projector is in the structured light mode, and the mark point image frames are acquired when the structured light projector is in the uniform light mode.

9. The method according to claim 6, wherein the structured light image frames and the mark point image frames in the first image frame sequence are interleaved.

10. The method according to claim 6, wherein the first image frame sequence comprises repeated image groups, each of the image groups comprises at least one of the structured light image frames and at least one of the mark point image frames, and comprises at least two consecutive image frames of a same type;
wherein each of the image groups comprises two consecutive structured light image frames and one mark point image frame; or
each of the image groups comprises two consecutive mark point image frames and one structured light image frame.

11. The method according to claim 6, wherein one of the mark point image frames corresponding to one frame of the mark point three-dimensional point cloud is adjacent to one of the structured light image frames corresponding to one frame of the target object three-dimensional point cloud;
for each frame of the target object three-dimensional point cloud, determining the second coordinate transformation relationship between the frame of the target object three-dimensional point cloud and one frame of the mark point three-dimensional point cloud comprises:
performing motion estimation on at least two adjacent image frames of the same type in the first image frame sequence, to determine a pose transformation of the camera when the camera acquires the at least two adjacent image frames, wherein a collection time interval between the at least two adjacent image frames of the same type and the structured light image frame corresponding to the frame of the target object three-dimensional point cloud is less than a preset time interval; and
determining the second coordinate transformation relationship based on the pose transformation.

12. The method according to claim 2, wherein the image frame set comprises a second image frame sequence and a third image frame sequence, wherein the second image frame sequence comprises the structured light image frames, and the third image frame sequence comprises the mark point image frames, wherein the second image frame sequence and the third image frame sequence are respectively acquired by two cameras in the three-dimensional scanning device;
wherein a collection time of one frame of the mark point three-dimensional point cloud is same as a collection time of one frame of the target object three-dimensional point cloud; for each frame of the target object three-dimensional point cloud, determining the second coordinate transformation relationship between the frame of the target object three-dimensional point cloud and one frame of the mark point three-dimensional point cloud comprises:
determining the second coordinate transformation relationship between the frame of the target object three-dimensional point cloud and the one frame of the mark point three-dimensional point cloud based on pre-calibrated extrinsic parameters of the two cameras.

13. The method according to claim 1, wherein the three-dimensional scanning device is an oral scanner, the target object is an oral cavity, the oral cavity is installed with a scan body, or the mark points are pasted on teeth/gums of the oral cavity, or the oral cavity is installed with a target;
wherein after stitching the multiple frames of the target object three-dimensional point cloud based on the first coordinate transformation relationship and the second coordinate transformation relationship, the method further comprises: displaying a three-dimensional model of the target object obtained by stitching in real-time on an interactive interface.

14. The method according to claim 1, wherein the frame of the target object three-dimensional point cloud and the one frame of the mark point three-dimensional point cloud satisfy one of:
that the frame of the target object three-dimensional point cloud and the one frame of the mark point three-dimensional point cloud are reconstructed based on one image frame;
that an image frame to reconstruct the one frame of the mark point three-dimensional point cloud and an image frame to reconstruct the frame of the target object three-dimensional point cloud are collected by different cameras at a same moment; or
that a time interval between a collection time of an image frame to reconstruct the one frame of the mark point three-dimensional point cloud and a collection time of an image frame to reconstruct the frame of the target object three-dimensional point cloud is less than a preset threshold.

15. An electronic device, comprising one or more processors, a memory, and computer instructions stored in the memory and executable by the one or more processors, wherein the one or more processors, when executing the computer instructions, is caused to perform the method according to any one of claims 1-14.
